(19) Europäisches Patentamt

European Patent Office

Office européen des brevets

(11) Veröffentlichungsnummer: **0 230 860 B1**

# (12) EUROPÄISCHE PATENTSCHRIFT

(45) Veröffentlichungstag der Patentschrift: **01.04.92**

(21) Anmeldenummer: **86810602.2**

(22) Anmeldetag: **18.12.86**

(51) Int. Cl.⁵: **G05D 11/13**, A62C 5/00

(54) **Dosier-Regelanornung und Dosier-Verfahren, insbesondere für ein Feuerwehr-Löschfahrzeug.**

(30) Priorität: **30.12.85 CH 5567/85**

(43) Veröffentlichungstag der Anmeldung:
**05.08.87 Patentblatt 87/32**

(45) Bekanntmachung des Hinweises auf die
Patenterteilung:
**01.04.92 Patentblatt 92/14**

(84) Benannte Vertragsstaaten:
**AT CH DE LI**

(56) Entgegenhaltungen:
**GB-A- 1 266 052**
**GB-A- 1 513 520**
**US-A- 3 870 065**
**US-A- 4 324 294**

(73) Patentinhaber: **Tony Brändle AG**
**St. Galler-Strasse 74**
**CH-9500 Wil(CH)**

(72) Erfinder: **Hermann, Peter, Dr.**
**Haldenstrasse 33**
**CH-2555 Brügg b/Biel(CH)**

(74) Vertreter: **Hepp, Dieter et al**
**HEPP & Partner AG Marktgasse 18**
**CH-9500 Wil(CH)**

**Beschreibung**

Die Erfindung betrifft eine Einrichtung bzw. ein Verfahren gemäss dem Oberbegriff der unabhängigen Ansprüche. Das Beimengen von Additiven zu durchströmendem Wasser, d.h. in einem dynamischen System, ist vor allem dann mit Problemen verbunden, wenn die durchströmende Menge in einem grossen Bereich schwankt und kleine Mengen von Additiv mit grosser Genauigkeit über den gesamten Mengenbereich zugemischt werden sollen. Zusätzliche Probleme treten auf, wenn die durchlaufende Menge mit kurzen Zeitkonstanten schwankt und/oder wenn auch die Additiv-Menge über einen grossen Bereich einstellbar sein soll. Derartige Verhältnisse treten z.B. bei Pump- und Mischanordnungen für Feuerwehr-Fahrzeuge auf. Ein typischer Durchlauf-Mengenbereich kann in einem solchen Anwendungsfall z.B. 150 - 2800 Liter Wasser pro Minute sein und das Zumischungsverhältnis für Additive, z.B. zur Schaumerzeugung, kann z.B. 3% bis 8% des durchströmenden Wassers betragen. Beim Beispiel ergibt sich eine Additiv-Menge zwischen 4,5 1 und 224 1 pro Minute, je nach Menge des durchfliessenden Wassers. Das durch Additiv und Verwendungszweck vorgegebene Verhältnis soll dabei möglichst im gesamten Mengenbereich mit relativ kleinen Toleranzen kontinuierlich geregelt werden.

Diese Anforderungen sind mit herkömmlichen Mischern, wie z.B. aus der US-PS-4,324,294 bekannt, nicht erfüllbar.

Bei einem solchen Mischer ist die Dosier-Charakteristik des Stellglieds, bestehend aus Stellmotor und Ventil, nicht korrigierbar. Schnelle Regelantwort im Bereich des weitgehend geöffneten Ventils lässt sich zwar theoretisch durch Auswahl eines Stellmotors mit entsprechend hoher Geschwindigkeit erreichen, doch führt dies zu grossen Abweichungen im unteren Mengenbereich von z.B. 3% oder 5% Additiv-Beimengung. Auch ist es schwierig, bei hohen Verstellgeschwindigkeiten im Feinbereich Schwingneigung des Regelkreises zu vermeiden.

Die gleichen Probleme treten auch bei einer Schaummittelzumischvorrichtung gemäss DE-OS-28 35 468 auf.

Aus der gattungsfremden US-PS-3,870,065 ist eine Mess- und Dosiereinrichtung für ein Infusionsgerät bekannt. Dabei wird die Ionenkonzentration von Blutplasma gemessen und der Messwert in einem Analogspeicher gespeichert. Das Speichersignal wird in einem Spannungs-Frequenz-Wandler verarbeitet und den Ventilen von zwei Dosieranordnungen zum Mischen von zwei verschiedenen Komponenten zugeführt. Für die der Erfindung zugrundeliegende Problemstellung - Verbesserung von Mischanordnungen mit (1) extrem grossen Durchlauf-Mengenbereichen und (2) grossen Genauigkeitsanforderungen für kleine Additiv-Dosiermengen - lässt sich dieser US-PS nichts entnehmen. Gleiches gilt für die GB-PS-1,513,520, welche eine Benzin-Pumpenanordnung betrifft. Diese Benzin-Pumpenanordnung weist eine digitale Zähl- und Auswertungsschaltung auf, mit welcher das Mischventil der Anordnung in Abhängigkeit von einem Vorgabewert und zwei Istwerten geregelt wird.

Beim praktischen Einsatz dieses bekannten Reglers ist es also schwierig, schnelle Regelantwort zu gewährleisten, ohne dass die Regelanordnung ins Schwingen gerät. Dies vor allem deshalb, weil die Charakteristik des Stellventils meist unregelmässig verläuft, vor allem im unteren Bereich (bei geringer Durchflussmenge) und im oberen Bereich (bei grösster Durchflussmenge) eine flachere Kennlinie aufweist als im gesamten mittleren Bereich. Flache Kennlinie bedeutet dabei, dass ein grösserer Verstellweg des Stellventils erforderlich ist, um die Durchflussmenge zu variieren. Wird nun der Regler so eingestellt, dass schnelle Regelantwort in den Bereichen des Stellventils mit flacher Kennlinie gewährleistet ist, dann tritt Ueberschwingen im steilen Bereich der Kennlinie des Stellventils auf. Wird dagegen der Regler auf den steilen Kennlinienbereich des Stellventils eingestellt, dann ist die Nachregelungszeit im Bereich geringer Durchflussmenge und ganz grosser Durchflussmenge zu lang.

Der Erfindung liegt die Aufgabe zugrunde, die Nachteile des Bekannten zu vermeiden, insbesondere eine über einen grossen Mengenbereich einstellbare und automatisch mit hoher Genauigkeit nachgeregelte Zumischung vom Additiven bei geringem technischem Aufwand und hoher Zuverlässigkeit zu erreichen.

Erfindungsgemäss wird dies in erster Linie gemäss kennzeichendem Teil der unabhängigen Patentansprüche erreicht.

Erfindungsgemäss wird deshalb vorgeschlagen, die Charakteristik des Regelkreises (Aenderung der Durchflussmenge in Abhängigkeit von der Aenderung der Regelabweichung) während des Regelvorgangs an die mengenabhängig-veränderliche Dosiercharakteristik der Stellventile bzw. der Dosiereinrichtung anzupassen. Der Dosierregler soll einen Funktionsgeber oder einen Rechner aufweisen, der ein Korrektur-Signal abgibt, das vom Soll- und/oder Istwert des Additiv-Durchflussmessers abgeleitet ist. Durch geeignete Ableitung des Korrektur-Signals vom Soll- bzw. vom Istwert des Additiv-Durchflussmessers lässt sich erreichen, dass das Stellsignal an die Charakteristik des Stellventils angepasst wird. Dadurch kann im Bereich des steilen Kurvenverlaufs eine Dämpfung oder aber im Bereich des flachen Kurvenverlaufs eine Anhebung des Stellsignals vorgenommen werden.

Auf diese Weise kann die Regelantwort im gesamten Regelbereich annähernd konstant kurz eingestellt werden, ohne dass das System ins Schwingen kommt. Wird das Korrektursignal vom Sollwert abgeleitet, lässt sich besonders schnelle Anpassung des Stellsignals an die Charakteristik des Stellventils erreichen. Das Korrektursignal lässt sich aber auch vom jeweiligen Istwert des Additiv-Durchflussmessers und damit von der effektiven Stellung des Stellventils ableiten oder aus einer Kombination von Ist- und Sollwert (z.B. Mittelwert) berechnen. Selbstverständlich kann das Korrektursignal auch durch direkte Positionsüberwachung des Stellventils, z.B. durch einen Fühler, gewonnen werden.

Das Hauptproblem bei derartigen Dosier-Regelungsanordnungen besteht im extrem grossen Durchflussbereich. So kann z.B. bei einem typischen Feuerwehr-Löschfahrzeug die Wassermenge zwischen ca. 150 1/min und 2800 1/min schwanken. Wenn man einen Additiv-Prozentsatz von etwa 3% bis 8% annimmt, ergibt sich daraus ein Bereich der Durchlaufmenge des Additivs von etwa 4,5 1/min bis etwa 220 1/min. Die grösste Additiv-Menge ist also etwa 1,5 mal so gross wie die kleinste Wassermenge und die kleinste Additiv-Menge beträgt nur 0,16 % der grössten Wassermenge. Ersichtlicherweise kann es deshalb auch bei Anpassung der Regelcharakteristik des Regelkreises an die Charakteristik des Stellventils noch ausserordentlich schwierig sein, die Additiv-Beimengung mit tragbar kleinen Abweichungen über den gesamten Mengenbereich von Wasser und Additiv zu gewährleisten. Erfindungsgemäss wird die Genauigkeit der Regelanordnung im gesamten Regelbereich, vorzugsweise bei gleichzeitiger Anpassung der Regelcharakteristik, wesentlich verbessert, wenn wenigstens zwei Stellventile zum Zuführen und Beimengen von Additiv zur durchfliessenden Wassermenge vorgesehen sind, wobei die Durchflussmengen der Stellventile unterschiedlich gross sind, sich jedoch im oberen Grenzbereich der Dosiereinrichtungen mit der kleineren Durchfluss-Menge bzw. im unteren Durchflussbereich der Dosierglieder mit der grösseren Durchfluss-Menge überlappen. Erfindungsgemäss wird dadurch ermöglicht, die Additiv-Beimengung im kleinen bzw. im grossen Mengen-Bereich durch zwei oder mehrere verschiedene Stellventile durchzuführen. Sobald die AdditivDurchflussmenge des einen Stellventils in den unteren Grenzbereich mit relativ grossen Toleranzen absinkt, kann die Regelanordnung auf das "kleinere" Stellventil umgeschaltet werden, welches im oberen Bereich seiner Kennlinie mit wesentlich geringeren Toleranzen betrieben werden kann. Die "Gesamt-Kennlinie" der Stellventile wird dabei ähnlich optimiert, wie bei einer Anhebung des Stellsignals im Bereich der Kennlinien-Abflachung eines einzigen Stellventils. Wird aber die Charakteristik des Regelkreises dabei noch an die Durch-lass- oder Fördercharakteristik der Stellventile angepasst, ergeben sich optimale Bedingungen.

Die Misch-Anordnung lässt sich in der Praxis besonders einfach realisieren, wenn sie ein Venturi-Rohr aufweist, durch welches wenigstens ein Teil des Wassers strömt, wenn die Saugleitung des Venturi-Rohrs mit einer Additiv-Zufuhreinrichtung verbunden ist, und wenn die angesaugte Additiv-Menge durch wenigstens eine vom Dosierregler beaufschlagte Durchfluss-Steuereinrichtung verstellbar ist. Erfindungsgemäss wird dadurch der einfache und störungssichere Aufbau des Venturi-Rohrs vereint mit hoher Genauigkeit. Die Saugleistung des Venturi-Rohrs kann dabei derart gewählt werden, dass sie über den gesamten Beimengungs-Bereich ausreicht. Die Additiv-Menge lässt sich dann einfach, schnell und genau durch Oeffnen bzw. Schliessen der Durchfluss-Steuereinrichtung erreichen. Diese kann vorteilhaft als Stellventil ausgebildet sein.

Für bestimmte Anwendungsbereiche lässt sich die Beimengung des Additivs auch mittels einer Dosierpumpe regeln. Dabei wird es vorteilhaft sein, wenn wenigstens zwei Dosierpumpen für verschiedene Mengenbereiche vorgesehen sind, wobei sich Nachmischung, d.h. Beimengung des Additivs nach der Wasser-Pumpe, besonders bewährt hat.

Besonders einfach lässt sich die Erfindung in der Praxis realisieren, wenn das Stellventil durch einen Gleichstrom-Stellmotor angetrieben wird. Hohe Regelgenauigkeit lässt sich erreichen, wenn der Dosierregler eine Schaltungsanordnung zur Impulsbreiten-Modulation mit einem Funktionsgeber für das Korrektursignal aufweist. Die Grösse des Stellsignals wird also durch die Impulsbreite bestimmt, wobei zunehmende Impulsbreite grössere Geschwindigkeit und Verstellung des Stellmotors und schnelleres Nachregeln des Stellventils bewirkt. Die Impulsbreite wird dabei durch Vergleich von Additivistwert und Additivsollwert (Rückfuhrgrösse) einerseits und das Korrektursignal des Funktionsgebers oder Rechners andererseits bestimmt. Richtungsumkehr des Stellmotors (Oeffnen oder Schliessen des Stellventils) wird durch Polaritäts-Wechsel erreicht.

Besonders vorteilhaft ist es dabei, wenn zur Impulsbreitenmodulation ein Rampengenerator vorgesehen ist.

Als Istzustand lässt sich dabei sowohl die Durchlass- oder Fördermenge der Dosiereinrichtung als auch - ggf. zusätzlich - der Druckabfall über der Dosiereinrichtung überwachen. Es hat sich nämlich gezeigt, dass Dosiereinrichtungen, wie Stellventile, häufig nicht nur eine bauteilbedingte Durchlass- oder Fördercharakteristik aufweisen, sondern dass sich durch unterschiedlichen Druckabfall die Charakteristik verändern kann.

Die Ansteuerung des Stellventils lässt sich auch durch andere Motoren erreichen, wie z.B. Schrittmotore, wobei dann die Anordnung zur Abgabe von Stellsignalen der Regelabweichung entsprechende Impulse abgibt. Die Verwendung von Gleichstrommotoren erlaubt vor allem einfachen, unkomplizierten Aufbau, während der Einsatz eines Schrittmotors vor allem dann erwägenswert ist, wenn die Regelanordnung für digitale Signalverarbeitung ausgelegt ist, wie dies z.B. bei Verwendung eines Mikrocomputers vorteilhaft möglich ist.

Die Erfindung ist im folgenden in Ausführungsbeispielen anhand der Zeichnungen näher erläutert. Es zeigen:

Fig.1 einen schematischen Signalflussplan einer Dosier-Regelanordnung mit den Merkmalen der Erfindung,

Fig.2 ein abgewandeltes Ausführungsbeispiel eines Signalflussplans gemäss Figur 1,

Fig.3 den schematischen Kurvenverlauf des Dosierreglers gemäss Figur 1 und 2 unter Berücksichtigung der Korrektur durch den Funktionsgeber,

Fig.4 verschiedene Signal-Kurvenverläufe an einzelnen Punkten des Signalflussplans gemäss Figur 1 oder 2,

Fig.5 ein Ausführungsbeispiel der Erfindung, bei welchem als Regler ein Rechner (Mikroprocessor) eingesetzt ist,

Fig.6 das Blockdiagramm der Ausrüstung eines Feuerwehr-Löschfahrzeugs mit den Merkmalen der Erfindung,

Fig.7 ein Blockschaltbild einer abgewandelten Dosier-Regelanordnung zur Verwendung beim Mischer gemäss Figur 6.

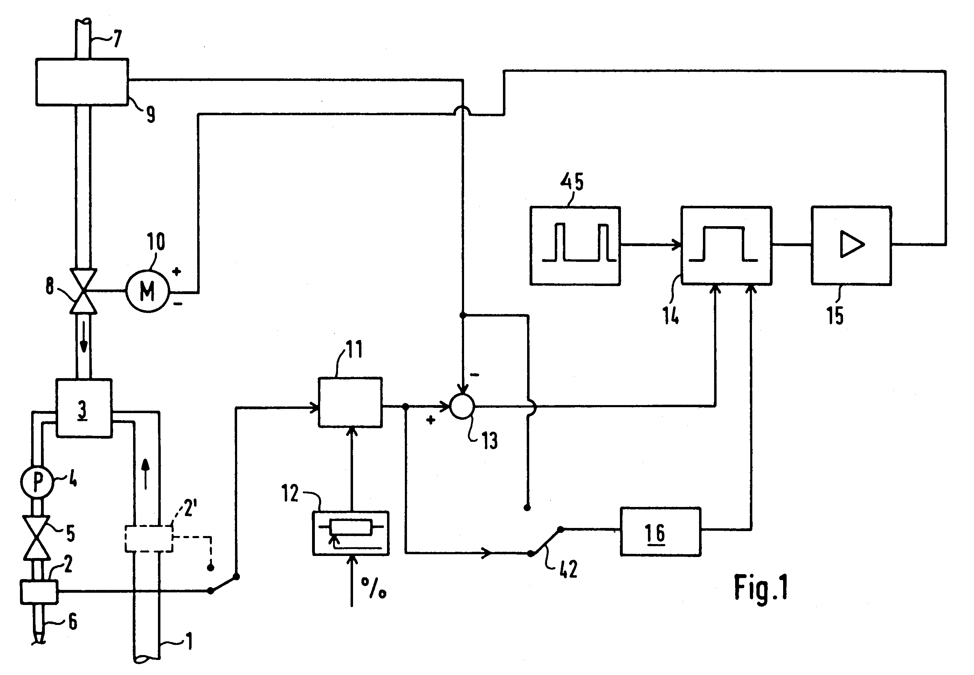

Gemäss Figur 1 fliesst Wasser von einer Versorgungsleitung 1 durch einen Mischer 3 zu einer Pumpe 4. Von dort wird es über ein Ventil 5 an eine Abgabeleitung 6 geführt, wobei die Gesamtmenge des durchströmenden Wassers mittels eines Wasser-Durchflussmessers 2 gemessen wird. Durch eine nicht dargestellte Pumpanordnung wird ein Additiv in einer Additiv-Zuführleitung 7 über ein Stellventil 8 dem Mischer 3 zugeführt und in diesem dem Wasserstrom der Versorgungsleitung 1 beigemischt. Die Menge des zugeführten Additivs wird in einem Additiv-Durchflussmesser 9 gemessen. Die Additiv-Durchflussmenge lässt sich durch das Stellventil 8 steuern, welches durch einen Stellmotor 10 verstellbar ist. Sofern bei entsprechender Auslegung der Gesamtanlage nicht die Gesamtmenge des abströmenden Wassers einschliesslich des beigemischten Additivs, sondern nur die dem Mischer 3 zufliessende Wassermenge gemessen werden soll, kann der Wasser-Durchflussmesser 2' in der gestrichelt angedeuteten Weise auch vor dem Mischer 3 angebracht werden.

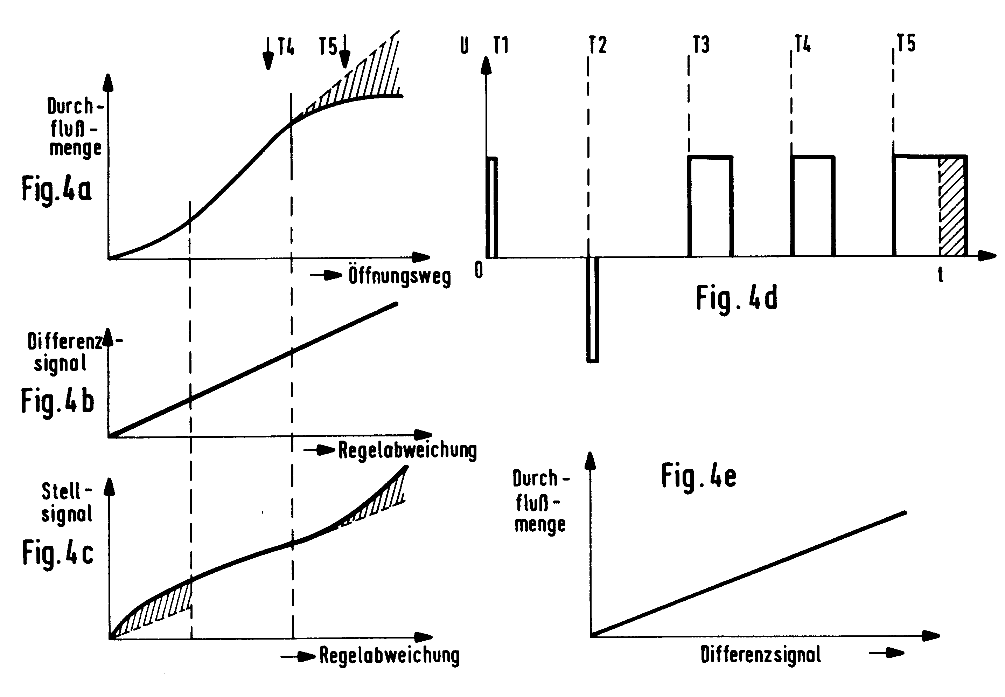

Wenn im Betrieb das Ventil 5 geöffnet wird, wird durch die Pumpe 4 Wasser in grossen Mengen in die Abgabeleitung 6 gepumpt. Die Wassermenge wird jeweils im Wasser-Durchflussmesser 2 gemessen, wobei ein der Wassermenge proportionales Signal an eine Schaltung 11 gelegt, die andererseits Eingangssignale von einer Vorwahleinrichtung 12 empfängt. An der Vorwahleinrichtung 12 lässt sich manuell der Sollwert der Additiv-Beimengung in Prozenten einstellen. In Abhängigkeit vom eingestellten Sollwert wird das Ausgangssignal an die Sollwert-Berechnungs-Schaltung 11 gelegt, in welcher auf der Basis des jeweiligen Ausgangssignals des Wasser-Durchflussmessers 2 der Additiv-Durchfluss-Sollwert ermittelt wird. Der Ausgang der Sollwert-Berechnungs-Schaltung 11 ist an den einen Eingang einer Vergleichseinrichtung 13 gelegt, an deren anderen Eingang der Additiv-Durchflussmesser 9 angeschaltet ist. In der Vergleichseinrichtung 13 wird demnach die Differenz von Additiv-Durchfluss-Istwert und Additiv-Durchfluss-Sollwert ermittelt, welcher Wert der Regelabweichung entspricht. Das Ausgangssignal der Vergleichseinrichtung 13 ist an einen Dosierregler 14 gelegt. Der Dosierregler 14 ist eingangsseitig an einen Taktgeber 45 angeschlossen, und gibt je nach Grösse und Amplitude des Differenzsignals von der Vergleichseinrichtung 13 Ausgangssignale unterschiedlicher Impuls-Breite und Polarität an einen Verstärker 15 ab, welcher Gleichstrom-Stellsignale an den Stellmotor 10 abgibt, der entsprechend das Stellventil 8 verstellt. Ein zweiter Eingang des Dosierreglers 14 ist an den Ausgang eines Funktionsgebers 16 angeschlossen. Der Funktionsgeber 16 kann über einen Funktionsschalter 42 entweder an den Ausgang der Schaltung 11 zur Berechnung des Additiv-Sollwerts oder an den Ausgang des Additiv-Durchflussmessers 9 angeschlossen werden. Der Funktionsgeber 16 erhält deshalb immer ein Eingangssignal, das entweder dem gegenwärtigen oder dem angestrebten Additiv-Beimengwert und damit der effektiven oder angestrebten Stellung des Stellventils 8 entspricht. Die Funktion des Dosierreglers 14 und des Funktionsgebers 16 ist nachstehend im Zusammenhang mit Figur 4 erläutert:

Figur 4a zeigt die Charakteristik des Stellventils 8. Wie dargestellt, steigt die Durchflussmenge beim Oeffnen (Oeffnungsweg) zunächst relativ langsam an, erreicht dann einen etwa linearen Mittelabschnitt mit steilem Kurvenverlauf und verflacht dann im oberen Oeffnungsbereich wieder.

Figur 4b zeigt den Anstieg des Differenzsignals in Abhängigkeit von der Regelabweichung. Der Einfachheit halber ist dabei nur positive Regelabweichung dargestellt. Der Kurvenverlauf gilt auch für negative Regelabweichung.

Figur 4d zeigt Ausgangs-Stellsignale am Verstärker 15, mit welchen der Stellmotor 10 beaufschlagt wird. Die zu den Zeitpunkten T1 bis T5 abgegebenen Impulse werden vom Taktgeber 45 ausgelöst. Die Impulsbreite wird im Dosierregler 14 bestimmt. Je grösser das von der Regelabweichung abhängige Differenzsignal am Ausgang der Vergleichseinrichtung 13 ist, desto breiter sind die abgegebenen Impulse gemäss Figur 4d. Die bei den Zeitpunkten T1 und T2 dargestellten kurzen Impulse (positiv und negativ) deuten nur geringfügige Regelabweichung an, so dass nur eine kleine Verstellung des Stellmotors 10 und des Stellventils 8 erforderlich ist, um den Sollwert zu halten. Aus der Impulsbreite bei T3, T4 ist eine grosse Regelabweichung ersichtlich, die durch Verstellen der Vorwahleinrichtung 12 und/oder sprunghaften Anstieg der Wasserabgabe durch Ventil 5 und Abgableitung 6 hervorgerufen sein kann. Durch die breiten positiven Impulse bei T4 und T5 wird mittels Stellmotor 10 das Stellventil 8 schnell geöffnet, so dass die Additiv-Zufuhrmenge über die Zufuhrleitung 7 entsprechend ansteigen kann. Bei T5 ist ein weiterer Stell-Impuls dargestellt, welcher gegenüber dem Impuls bei T4 stark verbreitert ist. Diese Impulsverbreiterung soll bewirken, dass der Stellmotor 10 im Bereich der Maximalöffnung des Stellventils 8 mit relativ flacher Charakteristik (Figur 4a) schneller öffnet, um schnelle Nachregelung zu gewährleisten. Die Impulsverbreiterung bei T5 ist schraffiert dargestellt. Ebenso ist in Figur 4a schraffiert dargestellt, wie durch die Impulsverbreiterung die abflachende Charakteristik des Stellventils 8 auf den gestrichelten Kurvenverlauf (etwa linear) angehoben wird. Dies wird erreicht durch den entsprechend steileren Kurvenverlauf des Stellsignals in Abhängigkeit von der Regelabweichung gemäss Figur 4c. Diese überproportionale Verstärkung des Stellsignals im unteren und oberen Durchflussbereich des Stellventils 8 wird durch den Funktionsgeber 16 erreicht, welcher vom Ausgang der Schaltung 11 Additiv-Sollwert-Signale empfängt. Sobald Sollwert-Signale anliegen, welche einer Positionierung des Stellventils im unteren bzw. im oberen Endbereich entsprechen, koppelt der Funktionsgeber 16 Steuersignale an den Dosierregler 14, welche eine Vergrösserung der Impulsbreiten bewirken, wie dies schraffiert in Figuren 4c und 4d dargestellt ist. Obwohl also das am Ausgang der Vergleichseinrichtung 13 bzw. am Eingang des Reglers 14 anliegende Differenzsignal linear-proportional zur Regelabweichung verläuft, ist das resultierende Stellsignal am Eingang des Stellmotors 10 im unteren und oberen Verstellbereich des Stellventils 8 angehoben, um die Veränderung der Durchflussmenge durch das Stellventil 8 in Abhängigkeit vom Additiv-Sollwert bzw. der angestrebten Position des Stellventils 8 trotz nicht linearer Charakteristik des Stellventils 8 etwa linear und proportional ansteigen zu lassen.

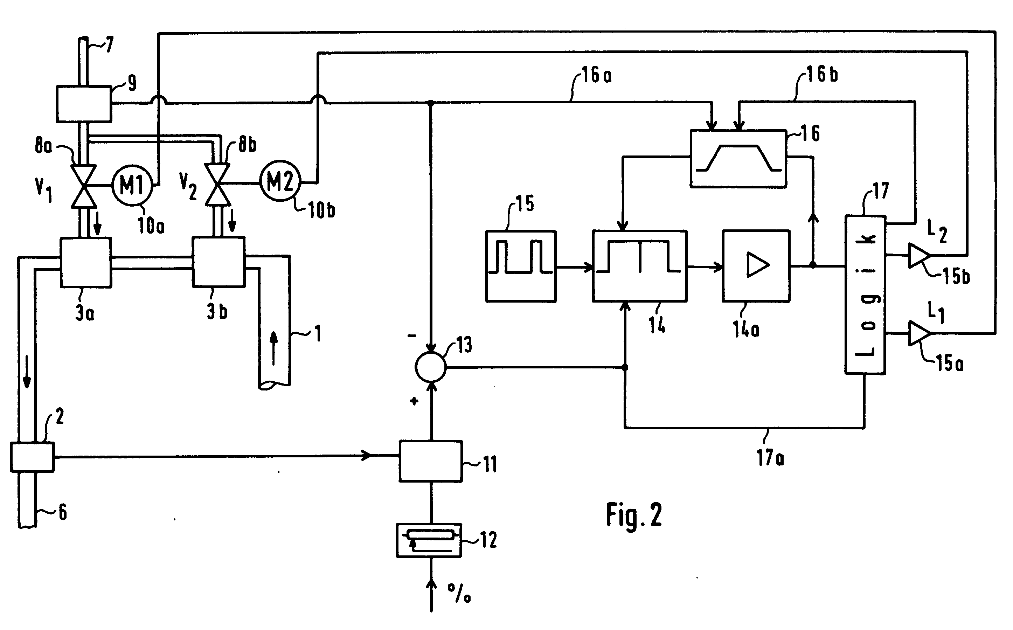

Figur 2 zeigt ein abgewandeltes Ausführungsbeispiel der Anordnung gemäss Figur 1, bei welcher vor allem abweichend zwei Mischer 3a und 3b zum Beimengen des Additivs vorgesehen sind. Die Additivmenge zum Mischer 3a wird durch ein Stellventil 8a geregelt, das durch einen Stellmotor 10a gesteuert wird. Der Additiv-Zufluss zum Mischer 3b wird durch ein stellventil 8b geregelt, das durch einen Stellmotor 10b gesteuert wird. Die beiden Stellmotoren werden durch Leistungs-Verstärker 15a, 15b mit Stellsignalen versorgt. Zwischen dem Dosierregler 14 und den Verstärkern 15a und 15b ist eine Logik-Schaltung 17 angeordnet. Ueber eine Eingangsleitung 17a ist die Logik-Schaltung 17 mit der Vergleichseinrichtung 13 verbunden. Der zweite Eingang des Dosierreglers 14 ist mit dem Ausgang des Funktionsgebers 16 verbunden, der seinerseits über eine Leitung 16a am Ausgang des Additiv-Durchflussmessers 9 liegt und dementsprechend jeweils der Durchflussmenge des Additivs bzw. der Position der Stellventile 8a oder 8b entsprechende Signale erhält.

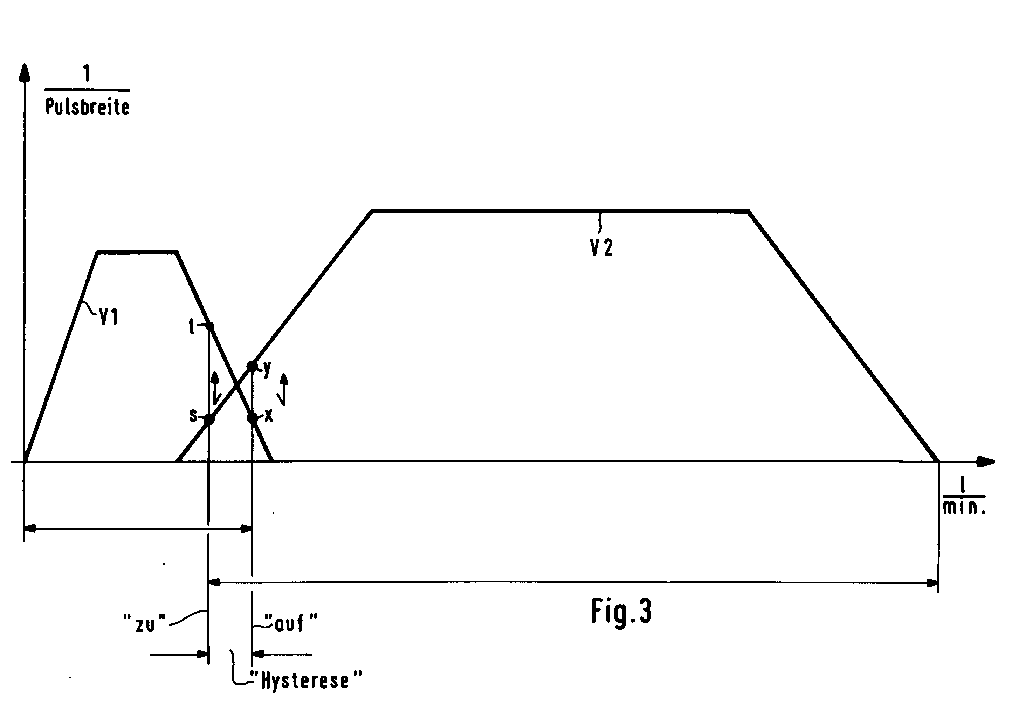

Die beiden Stellventile 8a und 8b weisen unterschiedliche Durchfluss-Charakteristik auf. In Figur 3 ist der Durchlauf-Mengenbereich der beiden Stellventile 8a, 8b dargestellt und mit V1 bzw. V2 gekennzeichnet. Die Darstellung der Durchlaufmenge (Liter pro Minute) erfolgt dabei in Abhängigkeit vom Kehrwert der Pulsbreite zur Ansteuerung der Stellmotore 10a bzw. 10b, d.h. in Abhängigkeit von der Verstellung des Oeffnungswegs der Stellventile durch die Stellmotore. Die beiden Durchflussbereiche V1, V2 überlappen sich etwas, so dass ein Dosier-Regelvorgang wie folgt ablaufen kann: Bei zunehmender, von Null ausgehender Regelabweichung wird das Ausgangssignal von der Vergleichseinrichtung 13 dem Dosierregler 14 und der Logik-Schaltung 17 zugeführt. Die vom Regler 14 abgegebenen und im Zwischenverstärker 14a verstärkten Regelsignale werden durch die Logik-Schaltung 17 dem Verstärker 15a zugeführt, welcher den Stellmotor 10a ansteuert, der seinerseits das Stellventil 8a mit dem Kurvenverlauf gemäss Figur 3 (V1) öffnet. Die Verbreiterung der Steuerimpulse im unteren bzw. oberen Bereich der Ventil-Charakteristik geschieht durch den Funktionsgeber 16 analog der im Zusammenhang mit Figur 1 und Figur 4 beschriebenen Weise. Der Funktionsgeber 16 gibt dabei Korrektursignale an den Dosierregler 14 ab, um den Kurvenverlauf V1 (Figur 3) zu erreichen, solange die Logik-Schaltung 17 Stellimpulse über den Leistungs-Verstärker 15a an den Stellmotor 10a abgibt. Sobald bei zunehmender Regelabweichung das Stellventil 8a den Durchfluss-Wert in Höhe des Punktes x gemäss Figur 3 erreicht hat, schaltet die Logik-Schaltung 17 vom Leistungsverstärker 15a auf den Leistungsverstärker 15b um, der gemäss Punkt y in Figur 3 mit Stellimpulsen versorgt wird und das Stellventil 8b durch Betätigung des Stellmotors 10b öffnet. Gleichzeitig wird das Stellventil 8a durch Betätigung des Motors 10a geschlossen. Mit zunehmender Regelabweichung nimmt die Pulsbreite zu, wodurch das Stellventil 8b vollständig geöffnet wird. Gleichzeitig erfolgt durch den Anstieg des Additiv-Durchflusssignals eine Umschaltung des Funktionsgebers 16 durch ein Steuersignal der Logikschaltung 17, das über Leitungen 16b an den Funktionsgeber 16 abgegeben wird. Durch die Umschaltung wird der Funktionsgeber 16 auf einen anderen Verlauf der Korrektur-Kurve geschaltet, um das Pulsbreiten-Durchflussmengen-Verhältnis V2 gemäss Figur 3 zu erreichen.

Wie in Figur 3 dargestellt, weist die Logik-Schaltung 17 (Fig. 2) beim Schliessvorgang der Stellventile 8a, 8b einen anderen Durchflussmengen-Schwellwert auf als beim Oeffnen ("zu" bzw. "auf"). Bei abnehmender Regelabweichung wird das Stellventil 8b im Kurvenverlauf V2 so lange geschlossen, bis der Punkt "s" in Figur 3 erreicht ist. Die Meldung der abnehmenden Regelabweichung wird über die Leitung 17a an die Logik-Schaltung 17 gelegt. Beim unteren Schwellwert "zu" schaltet die Logik-Schaltung 17 wieder vom Leistungsverstärker 15b auf den Leistungsverstärker 15a, der Stellmotor 10b schliesst das Stellventil 8b, der Stellmotor 10a wird durch den Leistungsverstärker 15a mit Stell-Impulsen versorgt und öffnet das Stellventil 8a auf den Wert "t" gemäss Figur 3.

Ersichtlicherweise wird durch den Einsatz von zwei verschiedenen Stellventilen eine wesentlich genauere Nachregelung im Bereich geringer Durchflussmengen des Additivs ermöglicht. Durch die "hystereseartige" Ueberlappung der beiden Durchfluss-Bereiche wird sichergestellt, dass ein nahtloser Uebergang zwischen den beiden Stellventilen 8a und 8b gewährleistet bleibt. Ausserdem wird verhindert, dass ein unkontrollierbares Hin- und Herschalten zwischen den beiden Stellventilen 8a, 8b erfolgt, wenn der Regler im Bereich eines der Schwellwerte arbeitet. Dies ist schon deshalb wesentlich, weil im Moment des Schliessens eines der Stellventile 8a, 8b bzw. des Oeffnens des anderen Ventils 8b, 8a durch die Logikschaltung 17 keine exakt definierbare Regelung möglich ist. Würde die Umschaltung sowohl beim "Aufwärtsregeln" als auch beim "Abwärtsregeln" jeweils beim gleichen Schwellwert um schalten, könnte der Regelkreis in Schwingung kommen und laufend unkontrolliert zwischen den beiden Ventilen 8a, 8b hin- und herschalten.

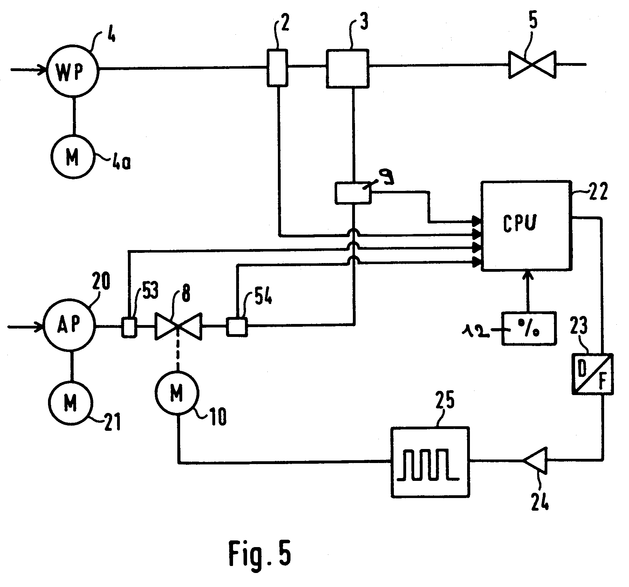

Beim Ausführungsbeispiel gemäss Figur 5 ist zur Förderung von Wasser ebenfalls eine Wasserpumpe 4 vorgesehen, welche durch einen Antriebsmotor 4a angetrieben wird. Zusätzlich ist noch eine Dosierpumpe 20 zur Förderung von Additiv zum Mischer 3 vorgesehen, wo es dem Wasserstrom beigemengt wird. Die Dosierpumpe 20 wird durch einen Dosiermotor 21 angetrieben. Zur Steuerung des Additiv-Stellventils 8 ist als Stellmotor 10 ein Schrittmotor vorgesehen, dessen Anzahl Drehungen unmittelbar proportional ist der Stellung des Stellventils 8 und damit der durch die Dosierpumpe 20 geförderten Additiv-Menge. Am Ventil 5 lässt sich das geförderte Wasser, vermischt mit Additiv entnehmen, wobei die Wassermenge im Wasser-Durchflusssmesser 2 und die Additiv-Menge im Additiv-Durchflussmesser 9 gemessen wird. Die Messwerte werden an den Eingang eines Rechners 22 gelegt, der ausserdem mit der Vorwahleinrichtung 12 verbunden ist, durch welche sich der Additiv-Sollwert prozentual vorwählen lässt. Im Rechner 22 wird analog der im Zusammenhang mit Figur 1 und 4 beschriebenen Weise zunächst aus dem Wasserdurchfluss-Istwert und der Einstellung der Vorwahleinrichtung 12 der Additiv-Durchfluss-Sollwert berechnet. Durch Vergleich dieses Werts mit dem Additiv-Durchfluss-Istwert vom Durchflussmesser 9 wird sodann die Regelabweichung ermittelt, woraus sich ein Regelsignal berechnen lässt, bei welchem die Charakteristik des Stellmotors 10 und der Dosierpumpe 20 berücksichtigt wird. Zur Berücksichtigung der Druckverhältnisse am Stellventil 8, welche die Fördermenge durch das Ventil beeinflussen, ist der Eingang des Rechners 22 ausserdem an zwei Druckmess-Einrichtungen 53, 54 angeschlossen. Der Ausgang des Rechners 22 ist mit einem Digital-Frequenz-Umwandler 23 verbunden, der über einen Verstärker 24 an eine Steuerschaltung 25 geschaltet ist. Die Anzahl der von der Steuerschaltung 25 abgegebenen Stellimpulse hängt also von der Regelabweichung ab. Je grösser die Regelabweichung ist, desto weiter wird der Stellmotor 10 verdreht und desto grösser ist die Pumpleistung der Dosierpumpe 20 durch das weiter geöffnete Stellventil 8. Dies erlaubt eine äusserst genaue Dosierung mit schneller Regelantwort.

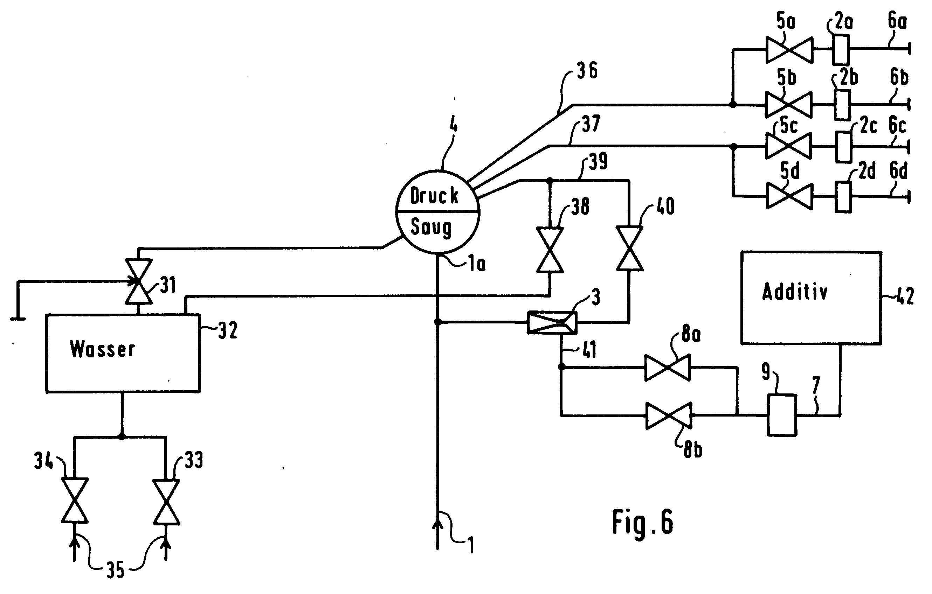

Figur 6 zeigt den Leitungsverlauf und die Mischanordnung in einem Feuerwehr-Löschfahrzeug mit den Merkmalen der Erfindung. Dabei ist eine Saug-Druck-Pumpe 4 über einen Zweiwegehahn 31 mit einem Wassertank 32 verbunden, der seinerseits über zwei Ventile 33, 34 mit Zufuhrleitungen 35 verbindbar ist. Die Pumpe 4 ist abgabeseitig über zwei Leitungen 36, 37 mit Ventilen 5a, 5b, 5c und 5d verbunden, die Abgabeleitungen 6a, 6b, 6c und 6d versorgen. An die Abgabeleitungen 6a bis 6d können in bekannter Weise Feuerwehrschläuche angeschlossen werden. Die Leitungen 6a bis 6d sind mit Wasser-Durchflussmessern 2a bis 2d versehen, so dass die gesamte Entnahme-Menge erfasst werden kann. Der Ausgang der Pumpe 4 ist ausserdem durch ein Ueberdruckventil 38 mit dem Wassertank 32 verbunden. Wenn bei laufender Pumpe 4 kein Wasser oder zu wenig Wasser über die Abgabeleitungen 6 entnommen wird, steigt der Druck am Pumpenausgang über den Schwellwert des Ueberdruckventils 38 an, und ein entsprechender Teil der zuviel geförderten und nicht abgenommenen Wassermenge wird zurück über den Wassertank 32 und den Zweiwegehahn 31 an den Eingang der Pumpe 4 geleitet. An der Abgabeseite der Pumpe 4 wird ausserdem über eine Leitung 39 und ein Ventil 40 ein Teil des geförderten Wassers durch ein als Mischer vorgesehenes Venturi-Rohr 3 geleitet, einer Haupt-Versorgungsleitung 1 zugeführt und über diese an den Eingang 1a der Pumpe 4 geführt. Eine Saugleitung 41 des Venturi-Rohrs 3 ist mit zwei Stellventilen 8a, 8b an den Ausgang eines Schaumtanks 42 zur Additiv-Zufuhr gelegt. Die Additiv-Zufuhrleitung 7 weist einen Additiv-Durchflussmesser 9 auf.

Im Betrieb der Dosier-Regelanordnung wird ersichtlicherweise nach Inbetriebsetzen der Pumpe 4 über die Leitung 39 und das Ventil 40 laufend ein Wasserstrom durch das Venturi-Rohr 3 zurück zum Eingang 1a der Pumpe 4 geführt. An der Saugleitung 41 liegt dabei konstant ein Unterdruck an, der bestrebt ist, Additiv über das Stellventil 8a und das Stellventil 8b anzusaugen, Sofern und soweit die Stellventile geöffnet sind.

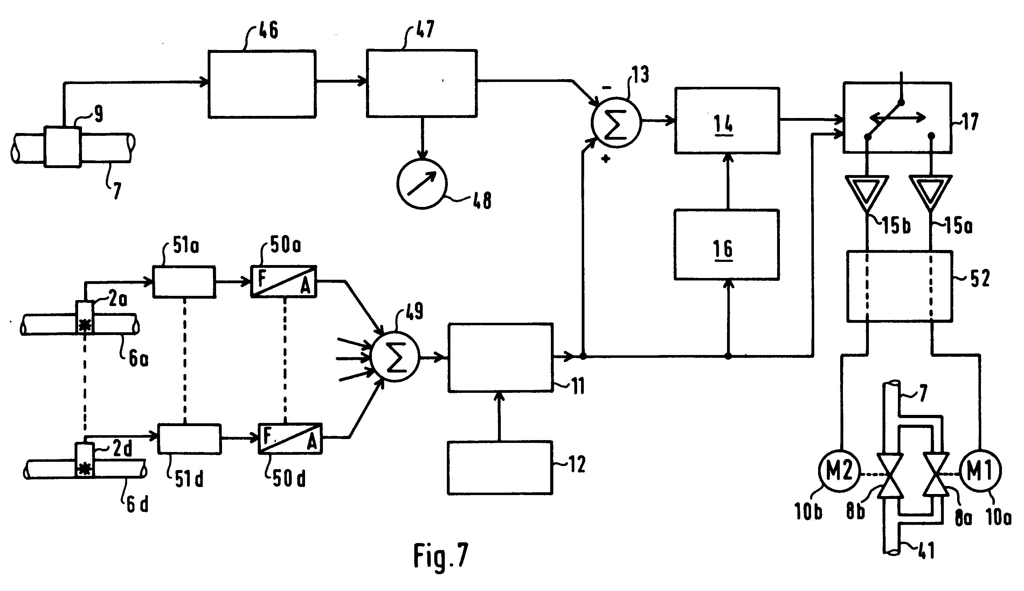

Die Steuerung der Stellventile 8a und 8b unter Berücksichtigung des Ausgangssignals der Wasser-Durchflussmesser 2a bis 2d und des Additiv-Durchfluss-Messers 9 durch nicht dargestellte Stellmotore erfolgt analog, wie im Zusammenhang mit Figur 2 beschrieben, was anhand von Figur 7 noch näher erläutert wird.

Wie dort schematisch im Blockdiagramm dargestellt, werden die Ausgangssignale des Additiv-Durchflussmessers 9, welcher den effektiven Durchfluss von Additiv durch die Zuführleitung 7 misst, an einen Messwertumformer 46 gelegt, welcher die Messwerte in Analogsignale umformt. Vom Messwertumformer 46 gelangen die Istwert-Signale an eine Anpassungsschaltung 47, welche eine Justierung der Signal-Amplitude zur Anpassung an den Regler-Eingang ermöglicht. Die Anpassungsschaltung 47 gibt Ausgangssignale an eine Anzeigevorrichtung 48 ab, welche den jeweiligen Additiv-Durchflusswert optisch anzeigt. Ausserdem ist die Anpassungsschaltung 47 mit dem einen Eingang der Vergleichseinrichtung 13 verbunden, welche andererseits mit dem Ausgang der Schaltung 11 zur Berechnung des Additiv-Sollwerts geschaltet ist. Die Schaltung 11 erhält einerseits Signale von der Vorwahleinrichtung 12, durch welche sich manuell der gewünschte Additiv-Prozentwert einstellen lässt. Andererseits ist die Schaltung 11 mit dem Ausgang eines Summiergliedes 49 verbunden. Dieses empfängt eingangsseitig über Frequenz-Analogumwandler 50a bis 50d, Anpassungselemente 51a bis 51d Durchfluss-Signale von den Wasser-Durchflussmessern 2a bis 2d, die in jeder der Abgabeleitungen 6a bis 6d vorgesehen sind. Am Ausgang des Summierglieds 49 liegen deshalb zu jedem Zeitpunkt Mess-Signale an, die dem Gesamt-Wasserdurchfluss durch die Leitungen 6a bis 6d, d.h. durch das Gesamtsystem entsprechen. Die Durchflussmesser 2a bis 2d sind als bekannte Flügelrad-Durchflussmesser ausgebildet, bei welchen ein Flügelrad durch den vorbeifliessenden Wasserstrom entsprechend der Wassermenge und Wassergeschwindigkeit in Rotation versetzt wird. Das Flügelrad ist (nicht dargestellt) in bekannter Weise mit einem Impulsgeber verbunden, dessen Ausgangssignale in der Frequenz proportional der jeweiligen Drehzahl des Flügelrades und damit der durchfliessenden Menge Wasser ist. In den Anpassungselementen 51a bis 51d werden die Impuls-Signale in der Amplitude und dem Impuls-Anstieg derart angepasst, dass sie in den Frequenz-Analogumwandlern 50a bis 50d verarbeitbar sind. Am Ausgang der Frequenz-Analogumwandler 50a und des Summiergliebs 49 liegen dementsprechend durchflussmengen-proportionale Analogsignale an, die in der Schaltung 11 zur Berechnung des Additiv-Sollwerts aus dem jeweiligen Wasser-Istwert und dem Vorgabe-Wert der Vorwahleinrichtung 12 berechnet. Das Additiv-Sollwert-Signal am Ausgang der Schaltung 11 liegt am Eingang der Vergleichseinrichtung 13, am Eingang des Funktionsgebers 16 und am Eingang der Logik-Schaltung 17. Der Funktionsgeber 16 verstellt in der im Zusammenhang mit Figur 3 beschriebenen Weise die Regelcharakteristik des Dosierreglers 14 in Abhängigkeit von der Grösse des Sollwerts. In der Vergleichseinrichtung 13 wird Additiv-Durchfluss-Sollwert und Additiv-Durchfluss-Istwert verglichen, dem Dosierregler 14 zugeführt und von diesem entsprechende Stell-Signale an die Logik-Schaltung 17 abgegeben. In der Logik-Schaltung 17 wird je nach Grösse des Additiv-Sollwert-Signals von der Schaltung 11 das Stellsignal vom Dosierregler 14 an den Verstärker 15a oder 15b gelegt. Die Stellsignale werden von den Verstärkern 15a, 15b an die Hand-Steuereinrichtung 52 gelegt, welche in Automatik-Stellung die Stellsignale jeweils an den Motor 10a bzw. 10b zur Verstellung der Stellventile 8a oder 8b weiterleitet. Die Hand-Steuereinrichtung 52 ermöglicht in an sich bekannter Weise die Abschaltung der Stellmotore 10a und 10b von den Verstärkern 15a und 15b und erlaubt Motor-Steuerung von Hand.

**Patentansprüche**

1. Dosier-Regelanordnung für einen Mischer (3, 3a) mit einer Dosiereinrichtung (8, 8a, 10, 10a, 10b, 20) zum Beimengen von wenigstens einem Additiv zu durchströmendem Wasser in einer Pump- und Mischanordnung mit grossem Durchlauf-Mengenbereich, insbesondere zur Bildung eines Feuerlösch-Schaumes, wobei die Pump- und Mischanordnung eine Einrichtung zur Wasserzufuhr, eine Pumpe zur Erzeugung von Druck-Wasser, und ein Abgabe-Rohrleitungssystem mit wenigstens einem Entnahme-Hahn aufweist, welche Dosier-Einrichtung wenigstens einen Dosierregler (14) und wenigstens ein Stell-Ventil (8, 8a, 8b) mit einem Stell-Motor (10, 10a, 10b) aufweist, wobei wenigstens je ein Durchflussmesser (2, 9) zur Ermittlung des Wasserdurchflusses und des beigemengten Additivs und eine Vorwahleinrichtung (12) zum Einstellen der gewünschten Führungsgrösse für die Additiv-Beimengung vorgesehen ist, dadurch gekennzeichnet, daß eine Sollwertermittlungs-Schaltung (11) zur Berechnung des Additiv-Durchfluss-Sollwerts aus der Additiv-Führungsgrösse und dem Ausgangssignal des Wasser-Durchflussmessers vorgesehen ist, daß eine Vergleichseinrichtung (13) eingangsseitig mit den Ausgangssignalen des Additiv-Durchflussmessers (9) (Additiv-Durchfluss-Istwert) und dem Ausgang der Schaltung (11) zur Berechnung des Additiv-Durchfluss-Sollwerts verbunden ist, die ausgangsseitig mit dem Differenzsignal (Regelabweichung) an den Dosierregler (14) angeschaltet ist, daß die Durchlass-Charakteristik der Dosiereinrichtung (8, 8a, 8b, 10, 10a, 10b, 20) nicht-linear ist und daß der Dosierregler mit einem Funktionsgeber (16) zur Erzeugung eines verstärkten Stellsignals im Bereich eines flacheren Kurven-Verlaufs oder eines gedämpften Stellsignals im Bereich eines steileren Kurven-Verlaufs der Durchlass-Charakteristik der Dosiereinrichtung versehen ist.

2. Dosier-Regelanordnung für einen Mischer (3, 3a) mit einer Dosiereinrichtung (8, 8a, 8b, 10, 10a, 10b, 20) zum Beimengen von wenigstens einem Additiv zu durchströmendem Wasser in einer Pump- und Mischanordnung mit grossem Durchlauf-Mengenbereich, insbesondere zur Bildung eines Feuerlösch-Schaumes, wobei die Pump- und Mischanordnung eine Einrichtung zur Wasserzufuhr, eine Pumpe zur Erzeugung von Druck-Wasser, und ein Abgabe-Rohrleitungssystem mit wenigstens einem Entnahme-Hahn aufweist, welche Dosier-Einrichtung wenigstens einen Dosierregler (14) und wenigstens ein Stell-Ventil (8, 8a, 8b) mit einem Stell-Motor (10, 10a, 10b) aufweist, wobei wenigstens je ein Durchflussmesser (2, 9) zur Ermittlung des Wasserdurchflusses und des beigemengten Additivs und eine Vorwahleinrichtung (12) zum Einstellen der gewünschten Führungsgrösse für die Additiv-Beimengung vorgesehen ist, dadurch gekennzeichnet, daß eine Sollwertermittlungs-Schaltung (11) zur Berechnung des Additiv-Durchfluss-Sollwerts aus der Additiv-Führungsgrösse und dem Ausgangssignal des Wasser-Durchflussmessers vorgesehen ist, daß eine Vergleichseinrichtung (13) eingangsseitig mit den Ausgangssignalen des AdditivDurchflussmessers (9) (Additiv-Durchfluss-Istwert) und dem Ausgang der Schaltung (11) zur Berechnung des Additiv-Durchfluss-Sollwerts verbunden ist, die ausgangsseitig mit dem Differenzsignal (Regelabweichung) an den Dosierregler (14) angeschaltet ist, und daß die Dosiereinrichtung wenigstens zwei Stellventile (8a, 8b) aufweist, deren Durchflussmengen-Bereiche unterschiedlich gross sind, sich jedoch im oberen Grenzbereich des Dosierglieds (8a, 10a) mit der kleineren Durchflussmenge bzw. im unteren Durchflussbereich des Dosierglieds mit der grösseren Durchflussmenge ("zu"/"auf", Fig.3) überlappen.

3. Dosierregelanordnung nach Anspruch 2 wobei die Durchlass-Charakteristik der Dosiereinrichtung (8, 8a, 8b, 10, 10a, 10b, 20) nicht-linear ist, dadurch gekennzeichnet, dass der Dosierregler (14) mit einem Funktionsgeber (16) zur Erzeugung eines verstärkten Stellsignals im Bereich eines flacheren Kurven-Verlaufs oder eines gedämpften Stellsignals im Bereich eines steileren Kurven-Verlaufs der Durchlass-Charakteristik des Stellventils versehen ist.

4. Dosier-Regelanordnung nach Anspruch 1 oder 3, dadurch gekennzeichnet, dass der Funktionsgeber (16) zur Erzeugung von Korrektursignalen wenigstens im oberen Durchflussbereich der Dosiereinrichtung (8, 8a, 8b, 10a, 10b, 20) vorgesehen ist, und/oder dass ein Stellventil (8a) für die Additivbeimengung im unteren Durchflussbereich und ein Stellventil (8b) für die Additivbeimengung im oberen Durchflussbereich vorgesehen ist.

5. Dosier-Regelanordnung nach Anspruch 1, 2 oder 3, dadurch gekennzeichnet, dass der Funktionsgeber (16) zur Erzeugung von Korrektursignalen aus dem Additivdurchflusswert und/oder dem Löschwasserdurchflusswert eingangsseitig mit einem Additivdurchflussmesser (9) und/oder einem Wasserdurchflussmesser (2, 2') verbindbar ist.

6. Dosier-Regelanordnung nach Anspruch 5 mit einer Schaltung (11) zur Ermittlung des Additivsollwerts aus dem Ausgangssignal einer Vorwahleinrichtung (12) und eines Wasserdurchflussmessers (2), dadurch gekennzeichnet, dass der Funktionsgeber (16) mit dem Ausgang der Schaltung (11) oder dem Ausgang des Additivdurchflussmessers (9) verbindbar ist.

7. Dosier-Regelanordnung nach einem der vorangegangenen Ansprüche 1 oder 3 bis 6, dadurch gekennzeichnet, dass der Dosierregler (14) eine Anordnung zur Impulsbreitenmodulation aufweist, und dass das aus einem Vergleich von Additivistwert und Additivsollwert gewonnene Rückführsignal einerseits und das Korrektursignal des Funktionsgebers (16) andererseits zur Impulsbreitenmodulation an den Eingang des Dosierreglers (14) gelegt ist.

8. Dosier-Regelanordnung nach Anspruch 7, dadurch gekennzeichnet, dass zur Impulsbreitenmodulation wenigstens ein gesteuerter Rampengenerator im Dosierregler (14) vorgesehen ist.

9. Dosier-Regelanordnung nach einem der vorangegangenen Ansprüche 1 oder 3 bis 8 mit einer Dosiereinrichtung (8, 8a, 8b, 10, 10a, 10b, 20) mit wenigstens zwei Dosiergliedern (8a, 10a bzw. 8b, 10b) mit je einem Stellventil (8a, 8b) und einem Stellmotor (10a, 10b), dadurch gekennzeichnet, dass der Funktionsgeber (16) zur Anpassung an die Charakteristik des jeweils aktiven Dosierglieds (8a, 10a bzw. 8b, 10b) umschaltbar ist.

10. Dosierverfahren zum Beimengen von Additiven zu durchströmendem Wasser in einer Pump- und Mischanordnung mit grossem Durchlaufmengen-Bereich, mittels einer Dosiereinrichtung mit nicht-linearer Durchlass-Charakteristik, insbesondere zur Bildung eines Feuerlösch-Schaum, wobei die jeweilige Durchflussmenge des Wassers laufend ermittelt und aus dem jeweiligen Wert und der Position einer Beimeng-Vorwahleinrichtung ein Additiv-Sollwert für die beizumischende Menge des Additivs ermittelt wird, dass ausserdem laufend die Ist-Menge des zufliessenden Additivs ermittelt und der Additiv-Istwert mit dem Additiv-Sollwert zur Ermittlung der Regelabweichung gemessen und einem Regler zugeführt wird, welcher Stellsignale an ein Stellglied zur Steuerung des Additiv-Zuflusses abgibt, dadurch gekennzeichnet, dass mit Hilfe eines an einen Dosierregler (14) angeschlossenen Funktionsgebers (16) die Aenderung der Stellsignale als Antwort auf eine Regelabweichung im Bereich des steileren Verlaufs der Durchlass-Charakteristik des Stellglieds gedämpft oder im Bereich des flacheren Verlaufs verstärkt wird.

11. Dosierverfahren nach Anspruch 10, dadurch gekennzeichnet, dass zur Anpassung des Stellsignals an die Ist-Position des Stellglieds der Dosiereinrichtung (8, 8a, 8b, 10, 10a, 10b, 20) deren jeweilige Durchlass- oder Fördermenge ermittelt wird.

12. Dosierverfahren nach Anspruch 10 und 11, dadurch gekennzeichnet, dass zur Anpassung des Stellsignals an die Ist-Position der jeweilige Soll-Zustand oder der Ist-Zustand der Dosiereinrichtung (8, 8a, 8b, 10, 10a, 10b, 20) ermittelt wird.

13. Dosierverfahren nach Anspruch 10, dadurch gekennzeichnet, dass zur Ermittlung der Ist-Position des Stellglieds und zur Anpassung der Stellsignale die jeweilige Druckdifferenz über der Dosiereinrichtung (8, 8a, 8b, 10, 10a, 10b, 20) ermittelt wird.

14. Dosierverfahren zum Beimeßgen von Additiven zu durchströmendem Wasser in einer Pump- und Mischanordnung mit grossem Durchlaufmengen-Bereich, insbesondere zur Bildung eines Feuerlösch-Schaums, wobei die jeweilige Durchflussmenge des Wassers laufend ermittelt und aus dem jeweiligen Wert und der Position einer Beimeng-Vorwahleinrichtung ein Additiv-Sollwert für die beizumischende Menge des Additivs ermittelt wird, dass ausserdem laufend die Ist-Menge des zufliessenden Additivs ermittelt und der Additiv-Istwert mit dem Additiv-Sollwert zur Ermittlung der Regelabweichung gemessen und einem Regler zugeführt wird, welcher Stellsignale an ein Stellglied zur Steuerung des Additiv-Zuflusses abgibt, dadurch gekennzeichnet, dass wenigstens zwei Stellventile (8a, 8b) mit unterschiedlichem Durchfluss-Mengenbereich, wobei sich die Bereiche im oberen Grenzbereich des Stellventils (8a) mit der kleineren Durchflussmenge bzw. im unteren Durchflussbereich des Stellventils (8b) mit der grösseren Durchflussmenge überlappen, zum Regeln der Additiv-Beimengung vorgesehen sind und dass in Abhängigkeit von der Grösse des Additiv-Durchfluss-Istwerts und/oder des Additiv-Durchfluss-Sollwerts eines der Stellventile (8a, 8b) angesteuert wird.

15. Verfahren nach einem der Ansprüche 10 bis 14 mit wenigstens zwei Stellventilen (8a, 8b) mit unterschiedlichen Durchflussmengenbereichen, die sich im oberen Grenzbereich des Dosierglieds mit der kleineren Durchflussmenge bzw. im unteren Durchflussmengenbereich des Dosierglieds mit der grösseren Durchflussmenge ("z"/"auf" in Figur 3) überlappen, dadurch gekennzeichnet, dass je nach dem Grad der Regelabweichung entweder das eine oder das andere Dosierglied (8a, 10a, oder 8b, 10b) zum Beimengen von Additiv zum Wasserstrom aktiviert wird, und dass zwei voneinander abweichende Durchflussmengen-Schwellwerte (s, t; bzw. x, y in Figur 3) vorgesehen sind, bei welchem die Additivbeimengung von einem Dosierglied auf das andere Dosierglied umgeschaltet wird.

16. Verfahren nach Anspruch 15, dadurch gekennzeichnet, dass der Durchflussmengenschwellwert bei zunehmender Regelabweichung (x, y) zur Erzeugung einer hystereseartigen Umschaltcharakteristik grösser ist, als der Schwellwert (s, t) zum Umschalten bei abnehmender Regelabweichung.

## Claims

1. Dosage regulator arrangement for a mixer (3, 3a) with a dosage device (8, 8a, 10, 10a, 10b, 20) for the addition of at least one additive to water flowing through a pump and mixing arrangement with a large range of rate of flow, in particular for the formation of a fire extinguishing foam, whereby the pump and mixing arrangement possesses a device for the supply of water, a pump for the generation of water under pressure and a discharge pipe system with at least one extraction tap, said dosage device possessing at least one dosage regulator (14) and at least one control valve (8, 8a, 8b) with a servomotor (10, 10a, 10b), whereby each is provided with at least one flowmeter (2, 9) for detection of the rate of flow of water and the added additive and a preselection device (12) for setting the desired control input for the addition of additive, characterized in that a nominal value detection circuit (11) is provided for calculation, from the control input for the additive and the output signal of the water flowmeter, of the value of the nominal rate of flow of the additive, that a comparison device (13) is connected on its input side with the output signals of the flowmeter (9) of the additive (actual value of rate of flow of the additive) and with the output of the circuit (11) for calculation of the nominal value of rate of flow of the additive, which is connected on its output side with the differential signal (control deviation) to the dosage regulator (14), that the flow characteristic of the dosage equipment (8, 8a, 8b, 10, 10a, 10b, 20) is non-linear and that the dosage regulator is provided with a functional transmitter (16) for generation of an amplified control signal during a sequence on the flatter area of the curve of the flow characteristic of the dosage equipment or a suppressed control signal during a sequence on the steeper area of the curve of the flow characteristic of the dosage equipment.

2. Dosage regulator arrangement for a mixer (3, 3a) with a dosage device (8, 8a, 8b, 10, 10a, 10b, 20) for the addition of at least one additive to water flowing through a pump and mixing arrangement with a large range of rate of flow, in particular for the formation of a fire extinguishing foam, whereby the pump and mixing arrangement possesses a device for water supply, a pump for the generation of water under pressure and a discharge pipe system with at least one extraction tap, said dosage device possessing at least one dosage regulator (14) and at least one control valve (8, 8a, 8b) with a servomotor (10, 10a, 10b), whereby each is provided with at least one flowmeter (2, 9) for detection of the rate of flow of the water and of the added additive and a pre-selection device (12) for setting the desired control input for the addition of additive, characterized in that a nominal value detection circuit (11) is provided for calculation, from the control input of the additive and the output signal of the water flowmeter, of the nominal value of the rate of flow of the additive, that a comparison device (13) is connected on its input side with the output signals of the flowmeter (9) of the additive (actual value of the rate of flow of the additive) and with the output of the circuit (11) for calculation of the nominal value of the rate of flow of the additive, which on its output side is connected with the differential signal (control deviation) to the dosage regulator (14) and that the dosage device possesses at least two control valves (8a, 8b) whose rate of flow ranges are of differing capacities, which however overlap in the upper limit of the range of the dosage element (8a, 10a) with the lesser rate of flow, respectively in the lower rate of flow range of the dosage element with the greater rate of flow ("off"/"on", Fig. 3).

3. Dosage regulator arrangement according to claim 2, whereby the flow characteristic of the dosage device (8, 8a, 8b, 10, 10a, 10b, 20) is non-linear, characterized in that the dosage regulator (14) is provided with a functional transmitter (16) for generation of an amplified control signal during a sequence on the flatter area of the curve of the flow characteristic of the control valve or a suppressed control signal during a sequence on the steeper area of the curve of the flow characteristic of the control valve.

4. Dosage regulator arrangement according to claim 1 or 3, characterized in that the functional transmitter (16) for generation of a correction signal is provided at least in the upper range of the rate of flow of the dosage device (8, 8a, 8b, 10a, 10b, 20) and/or that a control valve (8a) is provided for addition of the additive in the lower range of the rate of flow and a control valve (8b) is provided for addition of the additive in the upper range of the rate of flow.

5. Dosage regulator arrangement according to claims 1, 2 or 3, characterized in that the functional transmitter (16) for generation of a correction signal, from the value of the rate of flow of the additive and/or from the value of the rate of flow of the extinguishing water, is able to be connected on its input side with a flowmeter (9) for the additive and/or a flowmeter of the water (2, 2').

6. Dosage regulator arrangement according to claim 5 with a circuit (11) for detection, from the output signal of a pre-selection device (12) and of a water flowmeter (2), of the nominal value of the additive, characterized in that the functional transmitter (16) is able to be connected with the output of the circuit (11) or with the output of the flowmeter of the additive (9).

7. Dosage regulator arrangement according to one of the preceding claims 1 or 3 to 6, characterized in that the dosage regulator (14) possesses an arrangement for modulation of the pulse width and that on the one hand the feedback signal, deduced from a comparison of the actual value of the additive and the nominal value of the additive, and on the other hand the correction signal of the functional transmitter (16), is fed to the input of the dosage regulator (14) for modulation of the pulse width.

8. Dosage regulator arrangement according to claim 7, characterized in that modulation of the pulse width is provided with at least one controlled ramp generator in the dosage regulator (14).

9. Dosage regulator arrangement according to one of the preceding claims 1 or 3 to 8 with a dosage device (8, 8a, 8b, 10, 10a, 10b, 20) with at least two dosage elements (8a, 10a, respectively 8b, 10b) each with a control valve (8a, 8b) and a servomotor (10a, 10b), characterized in that the functional transmitter (16) is able to be switched over for adjustment to the characteristic of the respectively active dosage element (8a, 10a, respectively 8b, 10b).

10. Dosage method for addition of additives to water flowing through a pump and mixing arrangement with a large range of rate of flow by means of a dosage device with a non-linear flow characteristic, in particular for formation of a fire extinguishing foam, whereby the respective rate of flow of the water is continuously detected and a nominal value of the additive for the volume of the additive to be added is ascertained from the respective value and from the position of an added volume pre-selection device, that apart from that the actual volume of the delivered additive is continuously detected and the actual value of the additive is measured with the nominal value of the additive for detection of the control deviation and is fed to a regulator which transmits control signals to a servo component for the control of the supply flow of the additive, characterized in that, with the aid of a functional transmitter (16) which is connected to a dosage regulator (14), the change of the control signals as a response to a control fluctuation is suppressed in the area of the steeper sequence of the flow characteristics of the servo component, or is amplified in the area of the flatter sequence.

11. Dosage method according to claim 10, characterized in that, for adjustment of the control signal to the actual position of the servo component of the dosage device (8, 8a, 8b, 10, 10a, 10b, 20), its respective flow or delivery volume is detected.

12. Dosage method according to claims 10 and 11, characterized in that respective nominal condition or the actual condition of the dosage device (8, 8a, 8b, 10, 10a, 10b, 20) is detected for adjustment of the control signal to the actual position.

13. Dosage method according to claim 10, characterized in that the respective pressure difference across the dosage device (8, 8a, 8b, 10, 10a, 10b, 20) is detected for ascertaining the actual position of the servo component and for adjustment of the control signals.

14. Dosage method for addition of additives to water flowing in a pump and mixing arrangement with a large range of rate of flow, in particular for the formation of a fire extinguishing foam, whereby the respective rate of flow of the water is continuously detected and, from the respective value and from the position of an added volume pre-selection device, a nominal value of the additive for the volume of the additive to be added is ascertained, that, apart from that, the actual volume of the supplied additive is continuously detected and the actual value of the additive is measured, with the nominal value of the additive for detection of the control deviation, and is fed to a regulator which delivers control signals to a servo component for control of the supply of additive, characterized in that at least two control valves (8a, 8b) with differing rate of flow range, whereby the ranges in the upper limit of the range of the control valve (8a) overlap with the lesser rates of flow, respectively, in the lower rate of flow range of the control valve (8b), overlap with the larger rates of flow, are provided for control of the addition of the additive, and that one of the control valves (8a, 8b) is controlled dependent upon the size of the actual value of the rate of flow of the additive and/or the nominal value of the rate of flow of the additive.

15. Method according to one of the claims 10 to 14 with at least two control valves (8a, 8b) with differing rate of flow ranges which, in the upper limit of range of the dosage element, overlap with the lesser rate of flow, respectively, in the lower rate of flow range of the dosage element, overlap with the greater rate of flow volume ("off"/"on" in Fig. 3), characterized in that, according to the amount of control deviation, either the one or the other dosage element (8a, 10a, or 8b, or 10b) is activated for the addition of the additive to the water flow and that two rate of flow volume threshold values, which deviate from one another (s, t, respectively x, y in Fig. 3), are provided, with which the addition of additive is switched over from one dosage element to the other dosage element.

16. Method according to claim 15, characterized in that the rate of flow threshold value is, for generation of a hsyteresis type switch over characteristic with increasing control deviation (x, y), larger than the threshold value (s, t) for switching over in the case of decreasing control deviation.

**Revendications**

1. Dispositif régulateur de dosage pour un mélangeur (3, 3a), comportant un dispositif de dosage (8, 8a, 10, 10a, 10b, 20) destiné à ajouter un ou plusieurs additifs à de l'eau en circulation, dans un dispositif de pompage et de mélange à plage de débit importante, notamment pour former une mousse carbonique, étant précisé que le dispositif de pompage et de mélange possède un dispositif d'alimentation en eau, une pompe pour produire de l'eau sous pression et un système de canalisations de distribution comportant un ou plusieurs robinets de soutirage, ledit dispositif de dosage possédant un ou plusieurs régulateurs de dosage (14) et une ou plusieurs soupapes de réglage (8, 8a, 8b) pourvues d'un moteur de réglage (10, 10a, 10b), moyennant quoi il est prévu respectivement un ou plusieurs débitmètres (2, 9) pour calculer le débit d'eau et l'additif ajouté, et un dispositif de présélection (12) pour régler la grandeur de guidage souhaitée pour l'adjonction d'additif, caractérisé en ce qu'il est prévu un couplage de calcul de valeur de consigne (11) pour calculer la valeur de consigne de débit d'additif à partir de la grandeur de guidage d'additif et du signal de sortie du débitmètre d'eau, en ce qu'un dispositif de comparaison (13) est relié, côté entrée, aux signaux de sortie du débitmètre d'additif (9) (valeur réelle de débit d'additif) et à la sortie du couplage (11) destiné à calculer la valeur de consigne de débit d'additif, et raccordé, côté sortie, au régulateur de dosage (14) à l'aide du signal différentiel (écart de réglage), en ce que la caractéristique de passage du dispositif de dosage (8, 8a, 8b, 10, 10a, 10b, 20) est non linéaire et en ce que le régulateur de dosage est pourvu d'un capteur décomposeur (16) en vue de produire un signal de réglage amplifié dans la zone d'un tracé de courbe plus plat, ou un signal de réglage atténué dans la zone d'un tracé de courbe à pente plus forte de la caractéristique de passage du dispositif de dosage.

2. Dispositif régulateur de dosage pour un mélangeur (3, 3a), comportant un dispositif de dosage (8, 8a, 8b, 10, 10a, 10b, 20) destiné à ajouter un ou plusieurs additifs à de l'eau en circulation, dans un dispositif de pompage et de mélange à plage de débit importante, notamment pour former une mousse carbonique, étant précisé que le dispositif de pompage et de mélange possède un dispositif d'alimentation en eau, une pompe pour produire de l'eau sous pression et un système de canalisations de distribution comportant un ou plusieurs robinets de soutirage, ledit dispositif de dosage possédant un ou plusieurs régulateurs de dosage (14) et une ou plusieurs soupapes de réglage (8, 8a, 8b) pourvues d'un moteur de réglage (10, 10a, 10b), moyennant quoi il est prévu respectivement un ou plusieurs débitmètres (2, 9) pour calculer le débit d'eau et l'additif ajouté, et un dispositif de présélection (12) pour régler la grandeur de guidage souhaitée pour l'adjonction d'additif, caractérisé en ce qu il est prévu un couplage de calcul de valeur de consigne (11) pour calculer la valeur de consigne de débit d'additif à partir de la grandeur de guidage d'additif et du signal de sortie du débitmètre d'eau, en ce qu'un dispositif de comparaison (13) est relié, côté entrée, aux signaux de sortie du débitmètre d'additif (9) (valeur réelle de débit d'additif) et à la sortie du couplage (11) destiné à calculer la valeur de consigne de débit d'additif, et raccordé, côté sortie, au régulateur de dosage (14) à l'aide du signal différentiel (écart de réglage), et en ce que le dispositif de dosage possède au moins deux soupapes de réglage (8a, 8b) dont les plages de débit ont des tailles différentes mais se chevauchent dans la zone limite supérieure de l'organe de dosage (8a, 10a) ayant le débit le plus faible, respectivement dans la zone de débit inférieure de l'organe de dosage ayant le débit le plus fort ("fermé"/"ouvert", fig. 3).

3.  Dispositif régulateur de dosage selon la revendication 2, dans lequel la caractéristique de passage du dispositif de dosage (8, 8a, 8b, 10, 10a, 10b, 20) est non linéaire, caractérisé en ce que le régulateur de dosage (14) est pourvu d'un capteur décomposeur (16) en vue de produire un signal de réglage amplifié dans la zone d'un tracé de courbe plus plat, ou un signal de réglage atténué dans la zone d'un tracé de courbe à pente plus forte de la caractéristique de passage de la soupape de réglage.

4.  Dispositif régulateur de dosage selon la revendication 1 ou 3, caractérisé en ce que le capteur décomposeur (16) prévu pour produire des signaux de correction est prévu au moins dans la zone de passage supérieure du dispositif de dosage (8, 8a, 8b, 10a, 10b, 20), et/ou en ce qu'il est prévu une soupape de réglage (8a) pour l'adjonction d'additif dans la zone de passage inférieure, et une soupape de réglage (8b) pour l'adjonction d'additif dans la zone de passage supérieure.

5.  Dispositif régulateur de dosage selon la revendication 1, 2 ou 3, caractérisé en ce que le capteur décomposeur (16) prévu pour produire des signaux de correction à partir de la valeur de débit d'additif et/ou de la valeur de débit d'eau pour éteindre l'incendie est apte à être relié, côté entrée, à un débitmètre d'additif (9) et/ou à un débitmètre d'eau (2, 2').

6.  Dispositif régulateur de dosage selon la revendication 5, comportant un couplage (11) pour calculer la valeur de consigne d'additif à partir du signal de sortie d'un dispositif de présélection (12) et d'un débitmètre d'eau (2), caractérisé en ce que le capteur décomposeur (16) est apte à être relié à la sortie du couplage (11) ou à la sortie du débitmètre d'additif (9).

7.  Dispositif régulateur de dosage selon l'une des revendications 1 ou 3 à 6 précédentes, caractérisé en ce que le régulateur de dosage (14) possède un dispositif de modulation de largeur d'impulsions et en ce que le signal de rétroaction obtenu à partir d'une comparaison de la valeur réelle d'additif avec la valeur de consigne d'additif, d'une part, et le signal de correction du capteur décomposeur (16), d'autre part, sont placés à l'entrée du régulateur de dosage (14) en vue de la modulation de largeur d'impulsions.

8.  Dispositif régulateur de dosage selon la revendication 7, caractérisé en ce qu'il est prévu, dans le régulateur de dosage (14), en vue de la modulation de largeur d'impulsions, un ou plusieurs générateurs de rampe commandés.

9.  Dispositif régulateur de dosage selon l'une des revendications 1 ou 3 à 8 précédentes, pourvu d'un dispositif de dosage (8, 8a, 8b, 10, 10a, 10b, 20) comportant au moins deux organes de dosage (8a, 10a respectivement 8b, 10b) ayant chacun une soupape de réglage (8a, 8b) et un moteur de réglage (10a, 10b), caractérisé en ce que le capteur décomposeur (16) est apte à être commuté en vue d'une adaptation à la caractéristique de l'organe de dosage actif respectif (8a, 10a, respectivement 8b, 10b).

10. Procédé de dosage pour ajouter des additifs à de l'eau en circulation, dans un dispositif de pompage et de mélange à plage de débit importante, à l'aide d'un dispositif de dosage à caractéristique de passage non linéaire, notamment en vue de produire une mousse carbonique, étant précisé que le débit respectif de l'eau est calculé en permanence et, à partir de la valeur respective et de la position d'un dispositif de présélection d'adjonction, une valeur de consigne d'additif est calculée pour la quantité d'additif à ajouter, que, par ailleurs, la valeur réelle de l'afflux d'additif est calculée en permanence et la valeur réelle d'additif, avec la valeur de consigne d'additif, est mesurée en vue du calcul de l'écart de réglage et transmise à un régulateur qui délivre des signaux de réglage à un organe de réglage en vue de commander l'afflux d'additif, caractérisé en ce que, à l'aide d'un capteur décomposeur (16) relié à un régulateur de dosage (14), la modification des signaux de réglage en réponse à un écart de réglage est atténuée dans la zone du tracé à pente plus forte de la caractéristique de passage de l'organe de réglage ou est amplifiée dans la zone du tracé plus plat.

11. Procédé de dosage selon la revendication 10, caractérisé en ce que, en vue de l'adaptation du signal de réglage à la position réelle de l'organe de réglage du dispositif de dosage (8, 8a, 8b, 10, 10a, 10b, 20), la quantité de passage ou le débit de celui-ci est calculé.

12. Procédé de dosage selon les revendications 10 et 11, caractérisé en ce que, en vue de l'adaptation du signal de réglage à la position réelle, l'état de consigne ou l'état réel respectif du dispositif de dosage (8, 8a, 8b, 10, 10a, 10b, 20) est calculé.

13. Procédé de dosage selon la revendication 10, caractérisé en ce que, en vue du calcul de la position réelle de l'organe de réglage et de l'adaptation des signaux de réglage, la différence de pression respective est calculée par rapport au dispositif de dosage (8, 8a, 8b, 10, 10a, 10b, 20).

14. Procédé de dosage pour ajouter des additifs à de l'eau en circulation, dans un dispositif de pompage et de mélange à plage de débit importante, notamment en vue de produire une mousse carbonique, étant précisé que le débit respectif de l'eau est calculé en permanence et, à partir de la valeur respective et de la position d'un dispositif de présélection d'adjonction, une valeur de consigne d'additif est calculée pour la quantité d'additif à ajouter, que, par ailleurs, la valeur réelle de l'afflux d'additif est calculée en permanence et la valeur réelle d'additif, avec la valeur de consigne d'additif, est mesurée en vue du calcul de l'écart de réglage et transmise à un régulateur qui délivre des signaux de réglage à un organe de réglage en vue de commander l'afflux d'additif, caractérisé en ce qu'il est prévu, pour la régulation de l'adjonction d'additif, au moins deux soupapes de réglage (8a, 8b) dont les plages de débit ont des tailles différentes, les plages situées dans la zone limite supérieure de la soupape de réglage (8a) ayant le débit le plus faible, respectivement celles situées dans la zone de débit inférieure de la soupape de réglage (8b) ayant le débit le plus fort se chevauchant, et en ce que l'une des soupapes de réglage (8a, 8b) est commandée en fonction de la grandeur de la valeur réelle de débit d'additif et/ou de la valeur de consigne de débit d'additif.

15. Procédé selon l'une des revendications 10 à 14, comportant au moins deux soupapes de réglage (8a, 8b) dont les plages de débit ont des tailles différentes et se chevauchent, dans la plage située dans la zone limite supérieure de l'organe de dosage ayant le débit le plus faible, respectivement dans celle située dans la zone de débit inférieure de l'organe de dosage ayant le débit le plus fort, ("fermé"/"ouvert" sur la figure 3), caractérisé en ce que, suivant le degré de l'écart de réglage, l'un ou l'autre des organes de réglage (8a, 10a, ou 8b, 10b) est activé en vue de l'adjonction d'additif dans le courant d'eau, et en ce qu'il est prévu deux valeurs seuils de débit différentes (s, t ; respectivement x, y sur la figure 3) pour lesquelles l'adjonction d'additif est commutée d'un organe de dosage à l'autre.

16. Procédé selon la revendication 15, caractérisé en ce que, quand l'écart de réglage (x, y) destiné à produire une caractéristique de commutation d'hystérésis augmente, la valeur seuil de débit est supérieure à la valeur seuil (s,t) destinée à la commutation.

Fig.1

EP 0 230 860 B1

Fig. 2

EP 0 230 860 B1

Fig.3

EP 0 230 860 B1

Fig. 4a — Durchflußmenge / Öffnungsweg

T4   T5

Fig. 4b — Differenzsignal / Regelabweichung

Fig. 4c — Stellsignal / Regelabweichung

U   T1   T2   T3   T4   T5

0   t

Fig. 4d

Fig. 4e — Durchflußmenge / Differenzsignal

EP 0 230 860 B1

18

Fig. 5

Fig.6

EP 0 230 860 B1

Fig.7